# EUROPEAN PATENT APPLICATION

(11) **EP 0 567 277 A1**
(43) Date of publication of application: **27.10.1993**
(21) Application number: 93302992.8
(22) Date of filing: 19.04.1993
(51) Int. Cl.: F02K 3/075, F02K 3/077

(54) **Bypass injector valve for variable cycle aircraft engines**

(30) Priority: 20.04.1992 US 870847
(71) Applicant: GENERAL ELECTRIC COMPANY, Schenectady, NY 12345 (US)
(72) Inventor: Wagner, Mark Joseph, Cincinnati, Ohio 45242 (US); Carey, John Philip, Upper Marlboro, Maryland 20772 (US)
(74) Representative: Pratt, Richard Wilson

(57) **Abstract**

Noise suppression of a variable cycle aircraft engine is achieved during takeoff by reducing the velocity and thrust of the primary exhaust flow. A bypass valve (30) located between a high pressure bypass air duct (32) and a low pressure flade duct (34) provides an alternative exhaust path for the bypass air (16). Mixing of the bypass air (16) and external fan air (28) reduces the fan pressure ratio and produces a dump loss, both of which reduce exhaust noise during takeoff.

## Description

### BACKGROUND OF THE INVENTION

### Field of the Invention

The present invention relates in general to noise reduction in a high speed civil transport aircraft engine and relates in particular to a valve which allows high pressure fan bypass air to mix with lower pressure flade air during takeoff.

### Description of Prior Developments

Noise reduction in current high speed civil transport aircraft engines is accomplished through a combination of high-flowing the engine, that is, operating the engine at its maximum airflow capability, and through the use of mechanical noise suppressors. Prior noise suppression schemes for a mixed flow turbofan or variable cycle engine 10, such as schematically illustrated in Figs. 1, 2 and 3, involve fitting a fixed area noise suppressor 12 in the primary exhaust stream 14 and introducing low temperature bypass air 16 into the center of the exhaust stream, thus creating a coannular exhaust nozzle system. Although engine 10 of Figs. 1, 2 and 3 is shown as a standard variable cycle engine, it could be modified as a fan-on-blade or "flade" engine of the type depicted in Figs. 4, and 6.

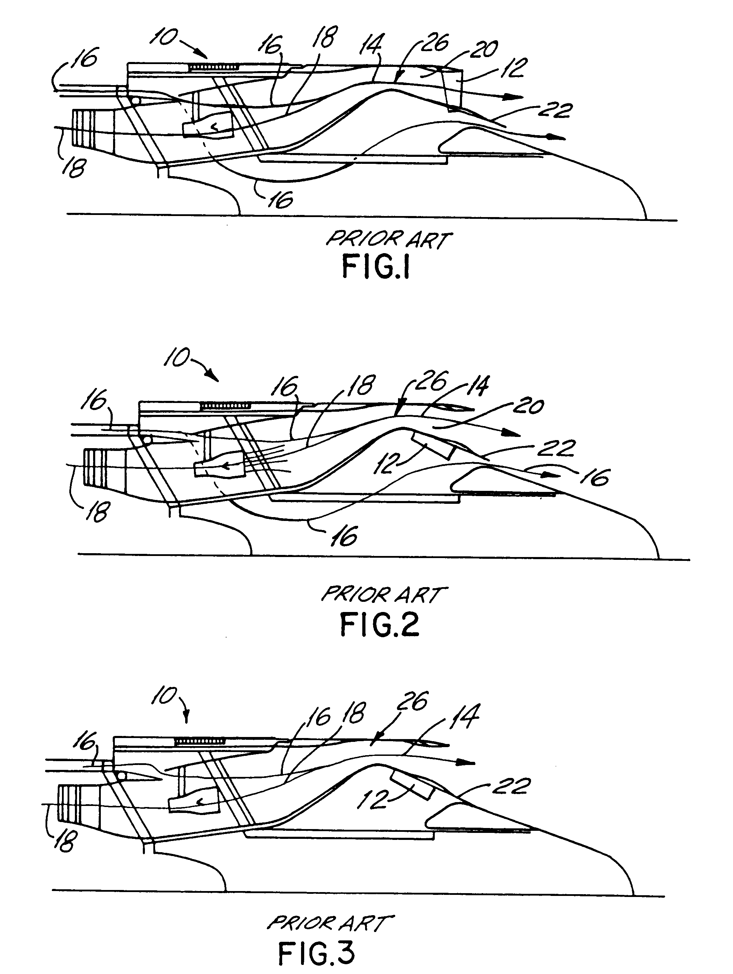

In the conventional coannular exhaust configuration shown in Figs. 1, 2 and 3, the total noise reduction is divided in two parts. One part is attributable to the mechanical noise suppressor 12 reducing noise. The other part is attributable to the slower cool central stream of bypass air 16 shearing with the primary stream of air 14 thereby slowing the core air and thus reducing noise.

Since the mechanical noise suppressor 12 fixes the exhaust nozzle area 20 of primary nozzle 26, the inverted velocity profile (IVP) nozzle 22, having a variable area, is used to effect nozzle pressure ratio modulation, hence thrust variation, at constant airflow. The velocity profile of the exhaust of Figs. 1, 2 and 3 is reversed from that of conventional exhaust systems in which the low velocity air surrounds the high velocity air. (Inverted velocity profile (IVP) refers to the fact that low velocity air is located radially inward from high velocity air.)Hence, on the variable cycle engine of Figs. 1, 2 and 3, the velocity profile of the exhaust system is inverted relative to a conventional exhaust system.

Use of the IVP nozzle 22 has been an essential feature of prior noise reduction systems on high speed civil transport aircraft engines. The IVP nozzle 22 is required in the conventional exhaust systems of Figs. 1, 2 and 3 for directing cool primary fan air 16 inside of the primary exhaust stream 14. The cool primary fan air 16 exhausts through the IVP nozzle 22 at a velocity lower than that of the hot primary exhaust stream 14 exiting the primary nozzle 26 so that when these two coannual exhaust streams mixed together upon exiting the engine 10, the primary exhaust stream 14 was slowed down by the fan air 16 thereby reducing overall exhaust noise levels.

IVP nozzle 22 also allows nozzle pressure ratio variation of the engine 10. This pressure ratio variation is needed to minimize jet exhaust noise. The engine must operate at its maximum airflow for as wide a range of thrust as possible. To do this, the engine must operate at its maximum fan speed and still vary thrust. Normally, this is done by varying exhaust nozzle area 20. Since a mechanical noise suppressor 12 is fixed in place within primary nozzle 26, the area 20 is also fixed. Hence, by opening the IVP nozzle 22, fan bypass air 16 is diverted from the primary nozzle 26. In this way, total nozzle area is varied and engine thrust can be modulated.

Referring now to Fig. 1, during takeoff, the mechanical noise suppressor 12 is positioned across the exhaust nozzle area 20 as the bypass air 16 is channeled radially inwardly and axially rearwardly to exit through the variable area IVP nozzle 22. This arrangement provides for noise suppression of the exiting primary air 14 during aircraft takeoff.

After takeoff, engine 10 typically accelerates the aircraft by operating as shown in Fig. 2. The mechanical noise suppressor 12 is moved out of the exhaust nozzle area 20 while the variable area IVP nozzle 22 reduces its exit area. During supersonic cruising operation, as illustrated in Fig. 3, the variable area IVP nozzle 22 blocks the flow of bypass air 16 therethrough such that substantially all bypass air is mixed within the primary exhaust stream 14 and exits the primary exhaust nozzle 26 through exhaust nozzle area 20.

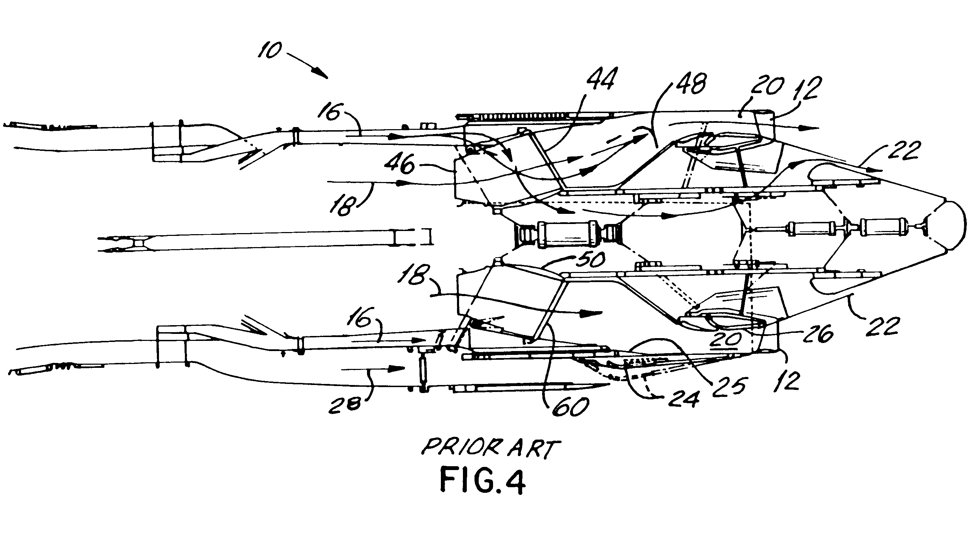

With the advent of advanced technology noise suppressors and the variable cycle flade engine concept, the inner plug or IVP nozzle 22 of Figs. 1, 2 and 3 is no longer needed to contribute to noise suppression. With the conventional flade design shown in Fig. 4, engine high- flowing compensates for the lack of a coannular exhaust system such as shown in Figs. 1,2and3.

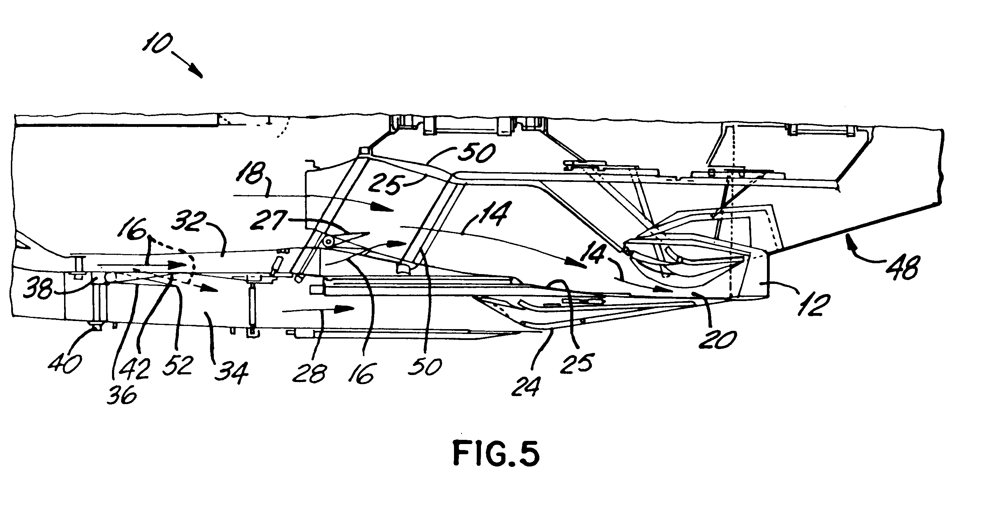

The flade engine configuration of Fig. 5 includes just two exhaust nozzles, i.e., the variable area flade nozzle 24 for a flade fan, and primary nozzle 26 for the variable cycle engine. The variable cycle engine essentially drives the flade fan which exhausts flade air 28 through flade exhaust nozzle 24. Core air 18 combines with bypass air 16 and through primary exhaust ducts 25.

During takeoff, only the variable cycle engine nozzle 26 requires a mechanical noise suppressor 12. With the nozzle 26 fitted with a noise suppressor 12, engine thrust can be modulated in two ways. First, by modulation of the flade fan operating line and second, by simultaneous modulation of both the variable cycle engine augmenter temperature rise and variable cycle engine nozzle pressure ratio. The variable cycle engine exhaust temperature and pressure must change simultaneously in order to maintain a variable cycle engine nozzle area 20 fixed by the size of mechanical noise suppressor 12.

Takeoff thrust power settings are relatively low, about 70% of maximum thrust capability, in order to reduce exhaust velocity and thereby reduce engine noise. Hence, the use of an afterburner is severely limited for thrust modulation since afterburners are generally used at power settings of about 70% of maximum thrust or higher.

Since the flade fan pressure ratio is low to begin with in order to provide supplemental thrust with low noise, and flade fan airflow is only about one-half that of the variable cycle engine, even large changes in the flade fan pressure ratio relative to its design pressure ratio result in little thrust variation. The fan pressure ratio is generally defined as the ratio of the total pressure of air exiting a fan to the total pressure of air entering the fan.

Accordingly, a method and apparatus are needed to throttle a variable cycle engine of the general type illustrated in Fig. 4 while the engine operates efficiently at constant maximum airflow. Such throttling is desired in order to reduce engine noise during takeoff.

### SUMMARY OF THE INVENTION

The present invention has been developed to fulfill the needs noted above and therefore has as an object the provision of a variable cycle aircraft engine which is capable of modulating thrust and suppressing noise beyond the range presently achievable with mechanical noise suppressors.

Another object of the invention is to extend the range of thrust modulation of a variable cycle engine while maintaining a constant maximum airflow through the engine since the core engine is designed to achieve maximum noise suppression at maximum airflow.

Still another object of the invention is to modulate the thrust of a high-flowing variable cycle engine having a fixed exhaust nozzle throat area.

Another object of the invention is to reduce the mass located at the rear of a variable cycle engine nozzle plug and thereby reduce the bending and shear loads experienced by the internal exhaust nozzle support structure and the engine rear support structure and particularly the struts of such support structures. By reducing such loading, the cross section of the struts which support the nozzle plug may be reduced, thereby reducing the obstruction to flow through the primary flowpath. This in turn reduces pressure losses in the primaryflowpath during acceleration and cruise operations.

Briefly, the invention is directed to a variable cycle engine having a variable area valve or injector provided between a primary duct for exhausting relatively high pressure fan bypass air and a flade duct through which passes relatively low pressure flade airflow. This arrangement increases the amount of thrust modulation available to a high-flowing engine having a fixed exhaust nozzle throat area.

The aforementioned objects, features and advantages of the invention will, in part, be pointed out with particularity, and will, in part, become obvious from the following more detailed description of the invention, taken in conjunction with the accompanying drawings, which form an integral part thereof.

### BRIEF DESCRIPTION OF THE DRAWINGS

In The Drawings:
Fig. 1 is a schematic partial half section view in axial section through the exhaust system of a prior art variable cycle engine as configured during takeoff;
Fig. 2 is a view of Fig. 1 as configured during acceleration;
Fig. 3 is a view of Fig. 1 as configured during supersonic cruise;
Fig. 4 is a schematic partial view in axial section through the exhaust system of a prior art variable cycle engine of the fan-on-blade or flade type;
Fig. 5 is a schematic partial half view in axial section through the exhaust system of a flade type variable cycle engine provided with a bypass valve in accordance with the present invention;

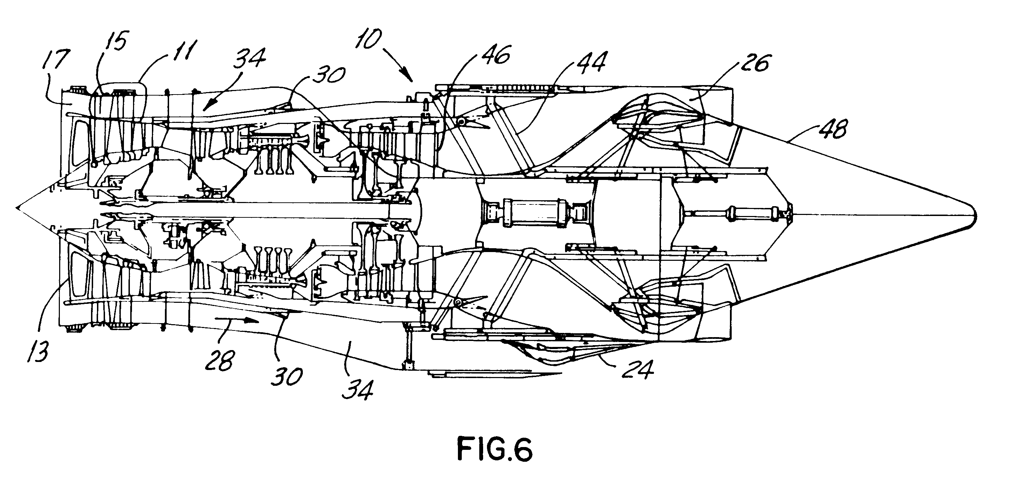

Fig. 6 is a schematic full view in axial section through an entire flade engine similar to that of Fig. 5;

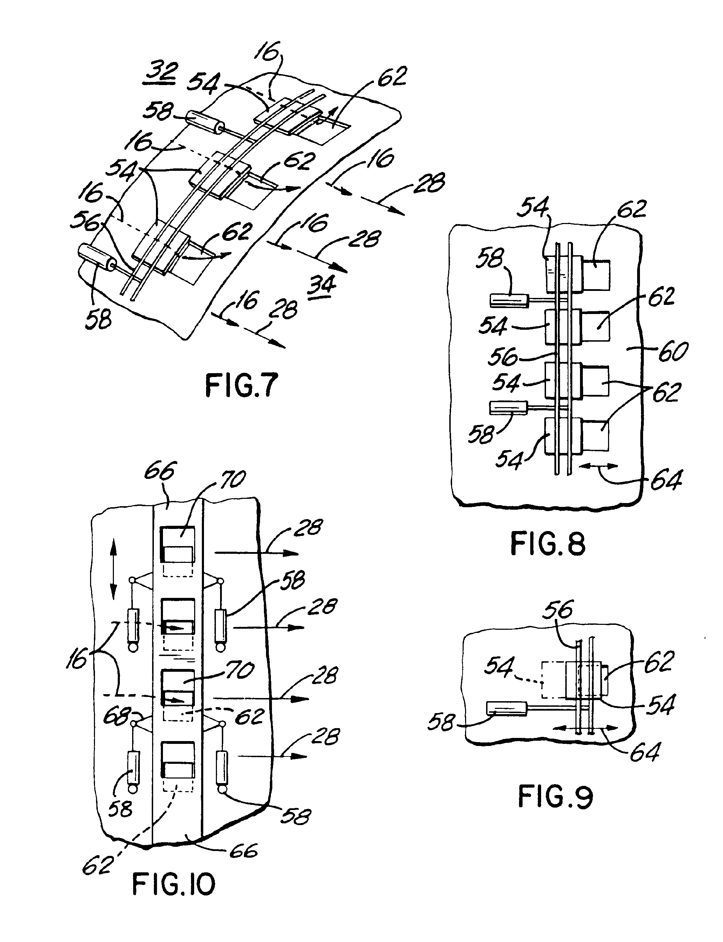

Fig. 7 is a fragmental perspective view of a specific embodiment of a bypass injector door system according to the invention;
Fig. 8 is a plan view of Fig. 7;
Fig. 9 is a fragmental schematic view of one of the injector doors of Figs. 7 and 8 showing the axial reciprocating movement of the door; and
Fig. 10 is a fragmental schematic view of another embodiment of a bypass injector door system according to the invention.

In the various figures of the drawing, like reference characters designate like parts.

### DETAILED DESCRIPTION OF THE PREFERRED EMBODIMENT

The present invention will now be described in conjunction with Figs. 5 and 6, which illustrate a variable cycle engine 10, of the flade type. Engine 10 is of the same general construction as that of Fig. 4, except for the provision of a bypass valve or bypass injector 30. Bypass valve 30 is radially interposed between the relatively high pressure, high velocity, fan bypass air 16 flowing through variable cycle engine bypass duct 32 and the relatively low pressure, low velocity flade air 28 flowing through flade duct 34.

As seen in Fig. 6, the flade engine 10 is essentially a standard variable cycle engine with a flade fan 11 attached to the primary fan 13. Flade airflow 28 is controlled by opening and closing a variable inlet vane 15 at the flade rotor inlet 17. Flade exit air 28 then flows through flade duct 34 which is separated from the primary core engine.

The general pattern of exhaust flow as illustrated in Fig. 5 includes a primary stream of core air 18 exiting a core engine portion of the variable cycle engine 10 through primary exhaust duct 25. Core air 18 combines with at least a portion of high pressure fan bypass air 16 which enters the primary exhaust duct 25 via primary valve 27. This combined flow exits as primary exhaust stream 14 via exhaust nozzle area 20 of variable cycle engine nozzle 26 and through mechanical noise suppressors 12.

When bypass valve 30 is opened during takeoff, a portion of bypass air 16 is mixed with the flade air 28 and exits through variable area nozzle 24. When bypass valve 30 is closed, the engine 10 of Fig. 5 functions in a manner generally the same as the engine of Fig. 4, except for some variations in the nozzle plug 48 as discussed below.

Although many configurations are possible for bypass valve 30, Fig. 5 illustrates a hinged door 36, selectively pivotable about its forward end portion by a powered hinge 38 which may be controlled or actuated by motor 40. Such a general valve configuration is well known, although its specific function and location as described herein is not. As the bypass valve 30 is selectively opened by pivoting the hinged door 36 radially outwardly, fan bypass air 16 flows into the flade duct 34 and mixes with the flade air 28.

The primary purpose of the variable area bypass valve 30 is to extend the range of thrust modulation beyond that available by other means while maintaining constant high- flowing airflow from the engine fan which is provided with an exhaust nozzle having a fixed throat area 20. This is achieved by channeling variable cycle engine bypass airflow 16 from the variable cycle bypass duct 32 into the flade duct 34 by opening a port such as hinged door 36.

By hinging the forward end of door 36 at the forward end of the opening 42, the aft free end or trailing edge 52 of door 36 can pivot in a stable manner into the flade duct 34. This will result in constant area mixing of the two flows 16, 28.

Assuming the afterburner is not operating, as variable cycle engine bypass flow 16 is removed from the variable cycle engine, the mixed flow 14 exiting the variable cycle engine is allowed more expansion, as there is less mixed flow due to removal of fan bypass air 16 from the primary exhaust nozzle stream 14 via bypass valve 30. This in turn results in a lower primary variable cycle nozzle pressure ratio, lower thrust and less exhaust noise.

The variable cycle engine bypass air 16 entering the flade duct 34 is ata higher pressure than the flade duct air 28 because the variable cycle engine has a higher fan pressure ratio than the flade. The mixing of these two streams 16, 28 results in a mixed pressure which is lower than what the mass averaged pressure would be due to non-ideal mixing. This phenomenon is known as a dump loss.

This dump loss reduces engine thrust below that which would occur if the bypass air 16 were expanded through a nozzle without mixing with the flade air 28. Hence, the extended thrust modulation range occurs from a change in the variable cycle engine nozzle pressure ratio range and the dump loss resulting from mixing two airstreams of unequal pressures.

As seen in Fig. 6, this method of thrust modulation or thrust reduction provides an added benefit by reducing the bending and shear loads applied to both the internal exhaust nozzle support structure 44 and the engine rear support structure 46. This is made possible by a reduction in the mass flow past the IVP nozzle 22 (Fig. 4), as flow is diverted away from the IVP nozzle area by bypass valve 30. This allows for the design of a smaller IVP nozzle, or as shown in Figs. 5 and 6, the complete elimination of the IVP nozzle 22.

Such downsizing or elimination of IVP nozzle 22 reduces the mass located at the rear portion of the nozzle plug 48. In one embodiment, elimination of IVP nozzle 22 resulted in a weight reduction of about 148 pounds and a moment reduction of about 17,760 pound inches on the nozzle struts.

Elimination of the IVP nozzle is possible because the flade exhaust air 28 provides a large volume of low velocity air partially surrounding the primary exhaust stream 18. Since the flade fan pressure ratio is lower than the primary fan pressure ratio, the flade exhaust air will also slow the primary core stream 18 as they mix upon exiting the engine 10. Since the volume of flade air is so much greater than that which would be channeled to the IVP nozzle 22, any additional air through an acoustic IVP nozzle would provide insignificant noise reduction.

Since the bypass 30 allows for channeling fan bypass air 16 into the flade duct 34 and away from the primary nozzle 26, just as the IVP nozzle 22 did in prior designs, thrust modulation is attained with bypass valve 30. Hence, the IVP nozzle 22 of Fig. 4 is no longer necessary. For these reasons, it is advantageous to remove the IVP nozzle 22 and thus reduce the overall complexity of the exhaust system.

Moreover, as the present invention does not require as much fan bypass air 16 to be directed into the nozzle plug 48, the hollow struts 50 which support the nozzle plug may be downsized. In particular, the internal open section of the struts 50 of Fig. 5 only carry sufficient airflow for pressurization of the nozzle plug 48. This allows the cross section of the struts 50 to be reduced, thereby reducing the pressure losses in the primary exhaust nozzle stream 14 due to blockage or obstruction to flow by the struts.

It can be appreciated that the actuation of bypass valve 30 provides for a reduction in exhaust velocity while the variable cycle engine 10 maintains a constant high- flowing (maximum) airflow. This enhances the takeoff flow holding performance of the flade. The high pressure flow of fan bypass air 16 is dissipated while the fan is kept running efficiently at full speed so that the exhaust velocity and the nozzle pressure ratio are reduced along with a reduction in exhaust noise.

The door 32 in Fig. 5, when opened, increases the Mach number of the flow through the flade duct adjacent the trailing edge 52 of door 36. This reduces the static pressure in this region and results in a greater pressure dump loss thereby further reducing the nozzle pressure ratio. As noted above, the bypass valve 30 is typically opened during takeoff to reduce engine thrust and exhaust noise. It is typically closed during cruising operations to provide maximum engine thrust.

There has been disclosed heretofore the best embodiment of the invention presently contemplated. However, it is to be understood that various changes and modifications may be made thereto without departing from the spirit of the invention. For example, although a pivoting door 36 is shown in Figs. 5 and 6, the bypass valve 20 may take the form of a linearly axially sliding doors 54 as shown in Figs. 7, 8 and 9,, ora a circumferentially rotating sliding door as shown in Fig. 10.

Doors 54 in Figs. 7, 8 and 9 may be simultaneously actuated in a coordinated manner via connecting ring 56 which interconnects each door. Linear actuators 58 are connected to ring 56 to selectively move each door 54 axially back and forth over the primary engine bypass duct casing 60. Ports 62 are formed through casing 60 to admit bypass air 16 into flade duct 34 to mix with flade air 28. In Fig. 9, doors 54 are shown about 80% closed in solid, and 100% open in phantom. Directional arrow 64 indicates the direction of movement of doors 54.

Another arrangement for bypass valve 30 is shown in Fig. 10 wherein circumferentially rotating sliding annular track 66 is tangentially actuated via linear actuators 58. Actuators 58 are connected to track 66 via connecting arms 68. Track 66 is formed with a plurality of circumferentially spaced apertures 70 which may be circumferentially rotated into partial, full or no overlap with ports 62 formed in casing 60. In this manner, variable area openings are selectively effected via selective actuation of actuators 58 for the entry of bypass air 16 from duct 32 into flade duct 34.

## Claims

1. A noise suppressing exhaust system for a variable cycle engine having a flade fan, said system comprising:
bypass duct means for exhausting high pressure air from said variable cycle engine;
flade duct means for exhausting low pressure air from said flade fan; and
bypass valve means selectively inter-connecting said bypass duct means and said flade duct means for mixing said high pressure airwith said low pressure air.

2. The system of claim 1, wherein said bypass valve means comprises a movable door disposed between said bypass duct means and said flade duct means.

3. The system of claim 2, further comprising hinge means and wherein said movable door is pivotally connected between said bypass duct means and said flade duct means by said hinge means.

4. The system of claim 3, wherein said movable door comprises a forward portion connected to said hinge means and a trailing portion movable within said flade duct means.

5. The system of claim 1, further comprising primary exhaust duct means for exhausting core air from said variable cycle engine and primary valve means for admitting at least a portion of said high pressure air from said bypass duct means into said primary exhaust duct means.

6. The system of claim 1, wherein said bypass valve means comprises a circumferentially rotating sliding door.

7. The system of claim 1, wherein said bypass valve means comprises a linearly actuated door.

8. The system of claim 1, further comprising a flade nozzle means located on said flade duct means downstream of said bypass valve means.

9. A method for reducing thrust and noise produced by a variable cycle aircraft engine, said engine comprising a flade fan, a flade duct for exhausting flade air from said flade fan, a bypass duct for exhausting bypass air from said engine, nozzle means and a bypass valve located between said ducts, wherein said method comprises opening said bypass valve so as to provide open communication between said ducts and thereby mix said bypass airwith said flade air to form a mixed flow; and exhausting said mixed flow from said nozzle means.

10. The method of claim 9, further comprising high-flowing said engine while forming said mixed flow.
